# EUROPEAN PATENT SPECIFICATION

(11) **EP 2 411 868 B1**
(45) Date of publication and mention of the grant of the patent: **13.03.2013**
(21) Application number: 09768254.6
(22) Date of filing: 18.11.2009
(51) Int. Cl.: G03B 21/14, G03B 21/22, G03B 37/04, G02B 6/00, H04N 5/74, H04N 9/31

(54) **Device and system for projecting images onto a screen**
Einrichtung und System zum Projizieren von Bildern auf einen Schirm
Dispositif et système pour projeter des images sur un écran

(30) Priority: 27.03.2009 WO PCT/NO2009/000115
(43) Date of publication of application: 01.02.2012
(73) Proprietor: Innovation Bureau AS, 3047 Drammen (NO)
(72) Inventor: MORTENSEN, Børre, N-3038 Drammen (NO)
(74) Representative: Roman Ekstedt, Måns
(86) International application number: PCT/NO2009/000396
(87) International publication number: WO 2010/110667

(56) References cited:
- JP-A- 2007 322 765
- US-A- 4 620 266
- US-A- 5 022 750
- US-A- 5 151 725
- US-A- 5 208 891
- US-A- 5 278 596
- US-B1- 6 179 426

## Description

The present invention relates to a device for projecting images onto a screen. The invention also relates to a system for projecting images onto a screen, wherein the projected image consists of a plurality of juxtaposed or partly overlapping sectional images, and wherein the system includes a corresponding plurality of said projector devices for projecting images onto the screen. The invention is also related to a particular use of the device or system.

It is known from, inter alia, control rooms, surveillance rooms, lecture theatres and projection rooms for images and film that noise from fans associated with projectors may be intolerable if the number of projectors is high, or if the projectors collectively emit a noise level that is uncomfortable for persons who are in the room. This applies, even , if the projection is accompanied by music and/or speech. To remedy this in traditional cinemas, the projector is located in a closed room behind the public and the image is projected through a glass window in the room wall.

Modern projectors, such as video projectors, are generally placed in the same room as the video screen, as it has become common to accept background noise from fans. However, such noise over some length of time is often found to be a significant stress phenomenon. When using a big screen on which several images are projected simultaneously from a plurality of projectors, either as separate images or as a composite, wide image, the total noise from the projectors can often exceed 50 dB, whilst the maximum acceptable background noise should not exceed 45 dB.

Noise from fans, which is partly due to the inherent noise of the fan motor and air circulation noise, is unfortunately not easy to avoid because powerful projector light sources, such as halogen bulbs or other incandescent bulbs as well as LED sources, emit substantial heat that must be led away from the projector to ensure stability of the electronics incorporated in the projector, as well as the colour filters used. An excessively high temperature in the projector will rapidly have an adverse effect on the lifetime of the projector in general and the light source and the image forming element in particular.

Another aspect of such projectors is that when the projector light source stops working, it will be necessary to spend some time changing light source, and there is also a risk that at the same time the projector may accidentally be subjected to mechanical shock, with the result that its alignment with the screen must subsequently be adjusted. In addition, a new light source will often have a different light intensity and a different colour spectrum than a light source that has been in use for some time, which may result in a lack of conformity with any other projectors in the same room, thus requiring readjustment of all the projectors to achieve the desired image quality.

Another aspect is that such light sources in projectors over time emit substantial heat that is circulated out into the room in which the projection screen is located, which in certain cases will mean that extra cooling must be effected in the room itself to prevent the living temperature from becoming too high.

US5151725 discloses a film editing table includes a light source mounted away from the editor's sitting position, with a light guide transmitting the light to the film editing table's optics to produce images on the table's rear projection screen with a brightness and color temperature substantially the same as the images displayed in commercial theatres such that accurate color judgments can be made for animation film. The light source is preferably a Xenon light source and the light guide is preferably a liquid light guide. The end of the guide from which the light emanates is movable along three axes, producing the brightest image possible.

US6179426 discloses a front projection display system that integrates an optical engine, having control and power supply electronics, and a dedicated projection screen to provide a compact video display device. The projection engine is coupled to a high gain projection screen, having an optimized reflection pattern to give optimum optical performance in ambient light and viewing angle sensitive environments. Components of the projection engine are modularly placed in a retractable arm, pivotally connected to the screen. The arm offers precise registration to the screen apparatus and thus repeatably precisely aligns optically and mechanically to the screen. The projection wall system has an open projection position and a closed storage position. Use of a radically offset projection head having matching keystone correction features allows the arm to protrude above the head of the presenter and offer a sharp and unobtrusive projection zone.

An object of the present application is to remedy some of the operational problems associated with the prior art and known installation methods, so as to facilitate noise reduction and also enable a simpler and faster change of light sources. Other objects will be apparent from the following description.

The invention can be used for all types of projection screens onto which images/films/videos are projected, not only flat screens but also curved screens and screens with curvature in the transverse and the longitudinal direction.

According to the invention, there is provided a device for projecting images onto a screen as defined in the appended independent claim 1.

Further embodiments of the device are set forth in attached dependent claims 2 - 13.

According to the invention, there is also provided a system for projecting images onto a screen as defined in the appended independent claim 14.

A currently preferred, but for the invention as such non-limiting, use of the device or of the system is based on at least one of said further component housings being placed in a round-the-clock person-manned room, in order to reduce operational noise during image and/or video projection in this room.

The invention will now be explained in more detail with reference to the attached drawing figures which show embodiments that are non-limiting for the invention.
Fig. 1 shows a first example of the device not covered by the invention.
Fig. 2 shows a second example of the device not covered by the invention.
Fig. 3 shows a third example of the device not covered by the invention.
Fig. 4 shows a fourth example of the device not covered by the invention.
Fig. 5 shows a first example of the system not covered by the invention.
Fig. 6 shows a second example of the system not covered by the invention.
Figs. 7 and 8 show variants of the examples shown in Figs. 1 - 3, but which also can be used with the system according to the invention.
Fig. 9 is a schematic perspective view of a section of a multi-function connection according to an embodiment of the invention.
Fig. 10 is a schematic side view of a detail of the present device according to an embodiment of the invention.
Fig. 11 is a schematic side view of a detail of the device according to another embodiment of the invention.
Fig. 12 shows a currently preferred embodiment of the device according to the invention.

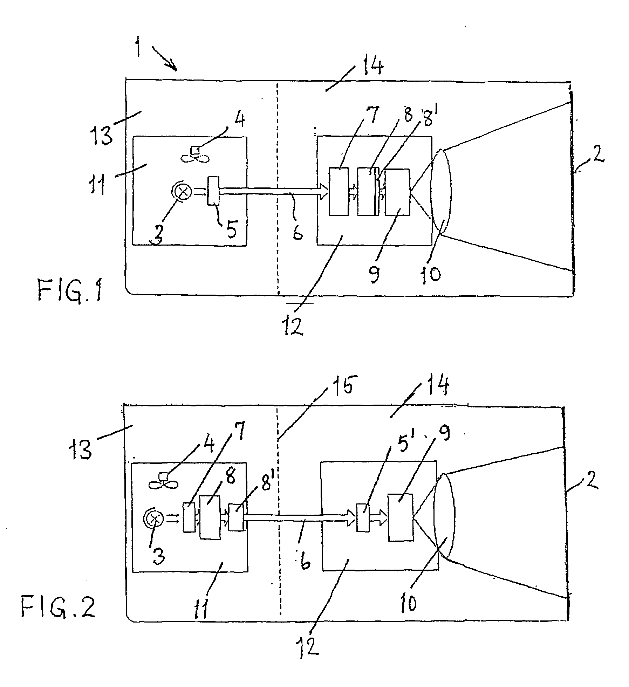

Fig. 1 shows a device for projecting images onto a screen 2, wherein the device has associated therewith components comprising a light source 3, a cooling fan 4 for the light source 3, a focusing lens 5 which receives light from the light source 3 and sends it on via at least one light guide 6, which specifically is a liquid light guide 6, to an optical unit 7 and then to a dynamic colour filter 8 which thus receives light from the focusing lens 5. A light-shaping lens 8' transmits light that has passed through the filter 8. The dynamic colour filter 8 may, for example, be a standard rotating colour filter that is found in most colour projectors. An image-forming element 9 receives light from the light-shaping lens 8'. A lens 10 is arranged for projecting onto the screen images received from the image-foiming element.

According to this example not covered by the invention, at least the light source 3 and the cooling fan 4 are placed in a first component housing 11 separate from the other components that are located in at least one further component housing, in the chosen example a second component housing 12, and the connection between the component housings is effected via at least said one light guide 6.

In the illustrated example, the focusing lens 5 is advantageously also installed in the component housing 11, whilst components 7 - 9 and optionally part of the lens 10 are in the component housing 12.

The first component housing 11 is located in a first room 13 which is sound-isolated from a second room 14, for instance by means of a wall 15, where the second component housing 12, including the lens 10, is in the second room. The second room 14 is delimited by or contains, within the invention's definition, the screen 2. Said light guide 6 connects the outlet of the component housing 11 with the inlet of the component housing 12.

Although here two component housings 11, 12 installed in respective rooms 13, 14 are shown and described as a non-limiting example, it is also conceivable, as mentioned in connection with the system, that, for example, three component housings may be used, in the first of which is placed at least a light source with associated fan/cooling. It is also conceivable that there may be one respective room associated with each component housing, although it may be practical to allow the two first component housings of a total of three to be associated with the first room 13 whilst the third component housing is associated with the second room 14.

The embodiment in Fig. 2 differs from that shown in Fig. 1 in that the optical unit 7, the dynamic colour filter 8 and the light-shaping lens 8' are placed in said first component housing 11. The light guide 6, which specifically is a liquid light guide 6, conducts light from the lens 8' to an optical connection 5' which guides the light onward to the image-forming element 9, and in such manner that modulated light is passed on from there to the lens 10. By placing the dynamic colour filter 8 in the first component housing 11, i.e. before the entrance of the light guide 6, light entering and guided by the light guide 6 is time multiplexed in segments of e.g. red, green and blue (and optionally white), which reduces the build up of heat in the liquid light guide 6 (which in turn spares the liquid light guide), and the utilisation of the light transmission of the light guide may be increased or maximized.

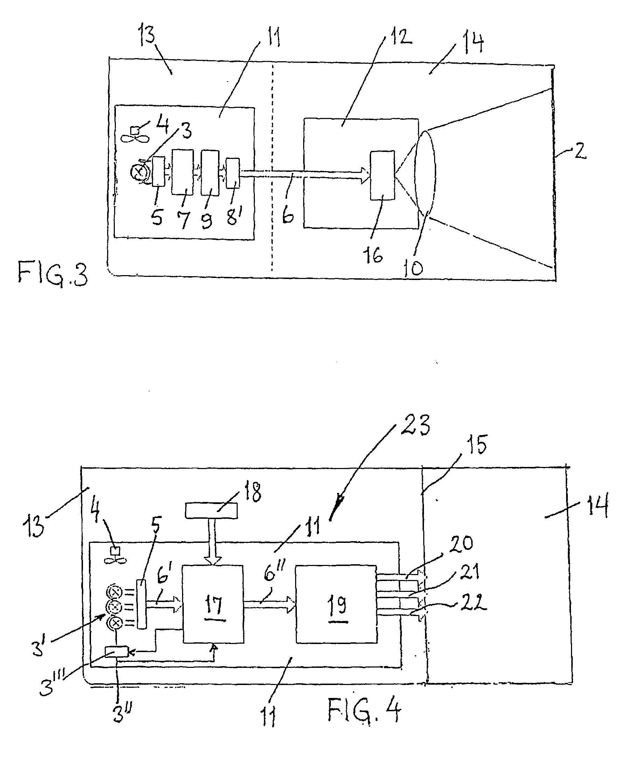

The example not covered by the invention shown in Fig. 3 differs further in that said image-forming element 9 is also placed in said first component housing 11. In this case, an optical unit 16 is disposed between the (liquid) light guide 6 and the lens 10 for correct image transmission to the lens 10.

The light source 3 may advantageously consist of, for example, an energy source powered lamp as indicated in Figs. 1 - 3, or a light mixer 17 which collects light from an energy source powered lamp 3' and from a light collector 18 for natural sun-based light, as indicated schematically in Fig. 4. In the last-mentioned solution, it is possible to reduce the light emission from the lamp 3' and thus save energy during the light part of an operating day. The energy source powered lamp 3' that is connected to the light mixer 17 thus advantageously has a controllable intensity which is an inversely proportional function of the intensity of sunlight that is received by and then supplied from the light collector 18.

It will be understood that by separating from the room 14 the noisy fan equipment 4 and also, wholly or to some extent, other equipment that emits noise, such as the colour filter 8, the disadvantages mentioned in the introduction can be wholly or partly avoided. In addition, it is, as mentioned, made possible to exploit natural daylight in order to generate a percentage of light for the projector, which, as mentioned, is energy-saving because the light intensity of the lamp 3' can be reduced. A reduction of the light intensity of the lamp 3' also helps to increase the lamp's life, which reduces total operating costs.

The aspects shown and described above are illustrated and explained in some more detail in connection with Fig. 4. There is shown in more detail a primary light source, such as a lamp 3' that is powered by an energy source 3" via a combined current and light regulator 3"'. Light from the lamp 3', optionally several lamps 3' or a lamp having associated back-up lamps, is fed to a lens 5 and thence on to a combined light mixer and regulator 17 via light guide 6'. This light mixer and regulator 17 receives outdoor light from a light collector 18, and outputs light via light guide 6" to a light manifold 19 and from there light passes on via light guides 20 - 22 to respective projectors 24 - 26. By way of example, three light guides are shown leading out from the manifold 19, but fewer or more light guides are of course possible, depending on the number of projectors that are to be fed with light via these light guides. For instance, the projectors could be of a type as shown in connection with the housing 12 in Fig. 1. The light guides 20 - 22 are be liquid light guides.

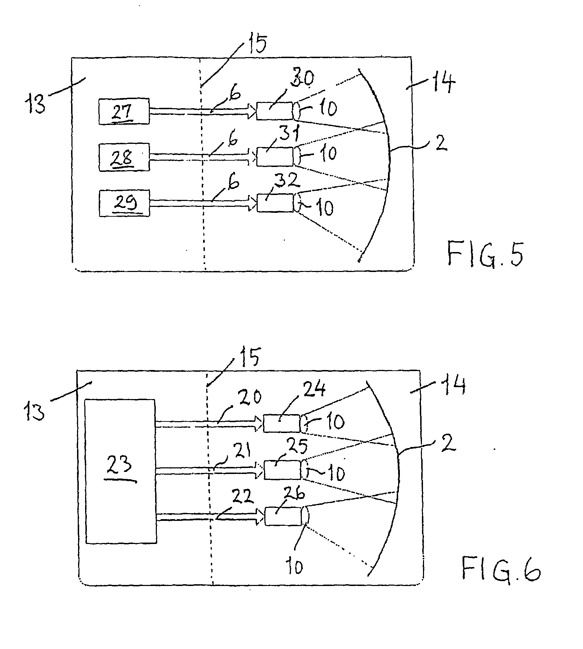

A device as shown in Fig. 4 could be designated generally by the reference numeral 23 and thus provide all projectors 24 - 26 collectively with light, i.e., that one light emitting device 23 is required, as indicated in Fig. 6. In the alternative shown in Fig. 5, three separate light sources 27 - 29 may, for example, be used, which may be of the same type as generally shown in Fig. 4 or, for example, as shown in Figs. 1 - 3 in connection with the housing 11, and where the projectors 30 - 32 may be configured as shown in connection with the housing in Figs. 1 - 3 or Fig. 12 respectively. Light guides 6, specifically liquid light guides 6, provide light connection between the contents of the housings 27 and 30, 28 and 31 or 29 and 32.

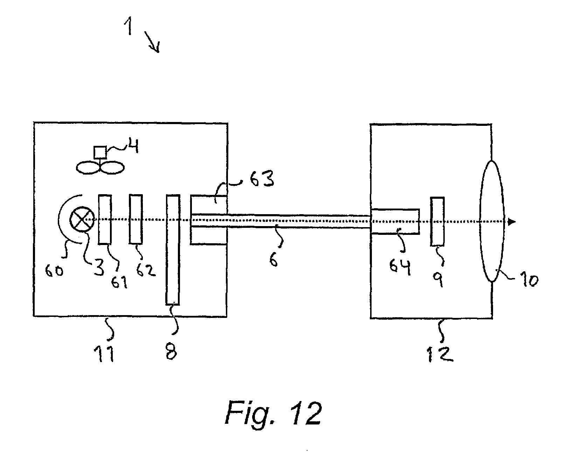

In the system, according to the invention, at least said light source 3; 3', 17, 18 and cooling fan 4 may therefore be installed in a plurality of first component housings 27 - 29 or in one first component housing 23 common to the projector devices. Other components associated with each projector device are, as shown and explained in connection with Fig. 12, arranged in at least one respective further component housing 24 - 26; 30 - 32 separate from said respective housings 27 - 29 or the common first component housing 23. As shown, the respective light guides 6; 20 - 22 connect said further component housings 30 - 32 and said respective component housings 27 - 29 or the common first component housing 23.

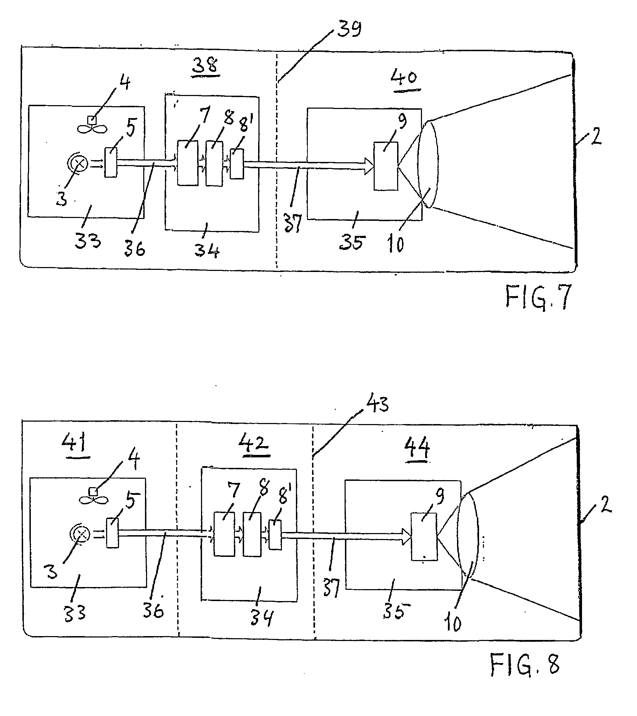

As mentioned, it is conceivable that at least said light source and cooling fan are installed in a plurality of first component housings or in one first component housing common to the projector devices, other components associated with each projector device being arranged in at least one respective further component housing separate from said respective or common first component housing, and wherein respective light guides connect said further component housings and said respective or common first component housing. In this connection, it is thus conceivable, by way of example, that the light source 3 with associated fan 4 and a focusing lens 5 are arranged in a first component housing 33, that the optics 7, the dynamic colour filter 8 and the light-shaping lens 8' are located in a second component housing 34, and that the image-forming element 9 and the projecting lens 10 are arranged in a third component housing 35, as shown in Figs. 7 and 8. Alternatively, it is conceivable that said first focusing lens 5, the optics 7, the dynamic colour filter 8, the light-shaping lens 8' and the image-forming element 9 are arranged in the second component housing 34, and that only the projecting lens 10 is arranged in the third component housing. Light guides 36, 37 form a connection between the component housings. At least one of the light guides 36, 37 is a liquid light guide. In this connection, it will be understood that the first 33 and the second 34 component housing may be located in a common room 38 which is sound-isolated, for instance by means of a dividing wall 39, from a room 40 in which said third component housing 35 and projection screen 2 are located, as shown in Fig. 7, or that the first 33 and the second 34 component housing may be located in separate rooms 41 and 42 which are sound-isolated, for instance by means of dividing wall 43, from a room 44 in which said third component housing and projection screen 2 are located, as shown in Fig. 8.

The use of the outlined solutions of the device and/or system could be particularly advantageous when at least one of said further component housings is placed in a round-the-clock person-manned room, so-called 24/7 operational service, in order to reduce operational noise during image or video projection in the room. In relation to what has been shown and described, such a component housing could, for example, be as is indicated by 12 in Figs. 1 - 3, by 30 - 32 in Fig. 5, by 24 - 26 in Fig. 6, and by 35 in Figs. 7 and 8. The person-manned room will in this case be 14 as indicated in Figs. 1 - 6, 40 as indicated in Fig. 7, and 44 as indicated in Fig. 8.

The light guides (6, 20 - 22, 36, 37) embodied as liquid light guides provide for good light transmission between the respective component housings over relatively long distances. The liquid light guide may have a length up to, but not limited to, about 30 meters. Any or each liquid light guide 6, 20 - 22, 36, 37 may be a single liquid light guide, namely (only) one tube filled with or containing liquid. The liquid may be organic. The liquid light guide may be flexible to allow at least some bending of the light guide. A non-limiting example of a liquid (filled) light guide/optical fiber that may be used in the present device and system is liquid lightguide Series 380, 5 mm diameter, provided by Lumatec. The denotation 'one tube' or 'single-tube' liquid light guide does not exclude that the tube is made of several joined tube portions or that the tube is surrounded by an outer tubing e.g. for protection. Instead of being a single (or single-tube) liquid light guide, the at least one liquid light guide may be a bundle of liquid-filled optical fibres (not shown).

Also, both ends of the liquid light guide(s) may be provided with an anti-reflective (AR) coating, to ensure minimum light transmission loss.

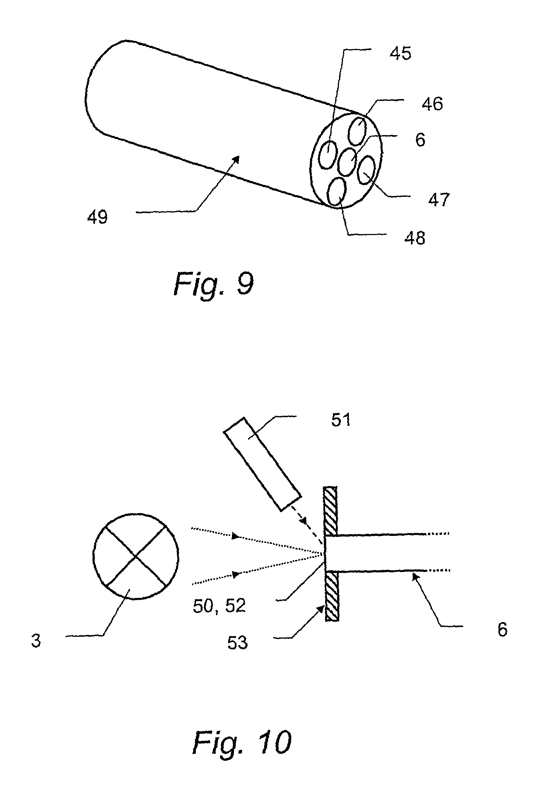

With reference to Fig. 9, the present device may further comprise transfer means provided or integrated in conjunction with or along the above mentioned light guides, e.g. the light guide 6 in Fig. 1. Said transfer means may for instance include separate members 45, 46 and 47 for transferring video signals, control signals and power, respectively, as well as a separate member 48 for transferring cooling air. The transfer means and the light guide together forms a multi-function connection or "umbilical" 49 for connecting at least some of the component housings. The members 45 and 46 may be metal or fibre cables, the member 47 may be a metal cable or wire, and the member 48 may be a tube, for example. When using the multi-function connection 49, the first component housing may further comprise at least one of a video signal input, a control signal input, and a power input (not shown), wherein the device is adapted so that video signals/control signals/power received by the video signal input/control signal input/power input may be transferred via the multi-function connection 49 to the second (or third) component housing. In this way, no inputs, except an input or adapter for the multi-function connection, are necessary on the second (or third) component housing, which for instance may facilitate installation and/or handling of the device. Also, a flow of air generated for instance by the fan 4 may be transferred via the tube 48 of the multi-function connection to the second (or third) component housing.

The above-mentioned cooling fan 4 may be replaced by, or combined with, a heat sink (not shown). Further, the above-mentioned focusing lens 5 may be replaced by, or used together with, a reflector adapted to focus light from the light source 3. The reflector may for instance be a spherical or elliptical reflector in which the light source 3 in placed. Further, the above mentioned light-shaping lens 8' may be replaced by a rod or integrator rod, e.g. for transferring light from the light guide to the image-forming element.

The present device or system further comprises a fixed ultraviolet (UV) filter. The UV filter may be a separate filter arranged between the light source and the at least one liquid light guide (e.g. light guide 6), or a lamp glass (in front) of the light source may function as UV filter, or a combination of a separate UV filter and the light source's lamp glass functioning as UV filter may be used. The UV filter serves to prevent UV radiation (from the light source 3) from entering the at least one liquid light guide. The UV radiation may otherwise damage the organic liquid in the light guide over time, whereby the liquid may loose the capability of conducting light.

The present device or system further comprises a fixed infrared (IR) filter. The IR filter may be arranged in an aperture between the light source and the at least one liquid light guide (e.g. light guide 6) for preventing IR radiation (from the light source 3) from centering the at least one light guide. The IR radiation may otherwise over time heat the organic liquid in the light guide and cause formation of bubbles in the organic liquid, whereby the liquid's capability of conducting light is reduced.

The UV filter and the IR are placed in the first component housing in figs. 1-3 or figs. 7-8. The UV filter and IR filter are typically placed before the dynamic colour filter 8, as seen in the direction of the light path from the light source 3 towards the projection lens. The IR filter being placed before the dynamic colour filter 8 protects said filter 8, and allows mechanical removal of IR heat at an early stage in the light path. The IR filter may be placed between the UV filter and the dynamic colour filter 8. The cooling fan for the light source may also cool the IR filter.

With reference to Fig. 10, the end 50 of the light guide 6 facing the light source 3 is usually placed near the focal point of the light source 3. In connection to this, it has been realised that the temperature at the end 50 during operation may increase significantly, which in turn may degrade the performance of the device and ultimately lead to malfunction. To this end, the present device further comprises a second cooling means adapted to specifically cool the end 50 of the light guide 6 facing the light source 4. Just the cooling provided by the fan 4 for the light source is usually not enough. Hence, using the second cooling means adapted to specifically cool the end 50 enhances the performance of the device and avoid malfunction thereof. The second cooling means is installed in the first component housing.

Said second cooling means may comprise an active cooling means, such as a fan 51 providing a concentrated flow of cooling air directed towards said end 50 of the light guide 6.

Said second cooling means may also comprise an aperture 52 in a cooling plate 53 placed at said end 50 of the light guide 6, wherein the diameter of the aperture 52 substantially corresponds to the diameter of said end 50 of the light guide, so that said end 50 may fit into said aperture 52. The cooling plate 53 will remove much of the light which not effectively can be used by the light guide and which otherwise is converted into heat in the light guide. The cooling plate 53 may for instance be made of metal. The cooling plate 53 may be regarded as a passive cooling means.

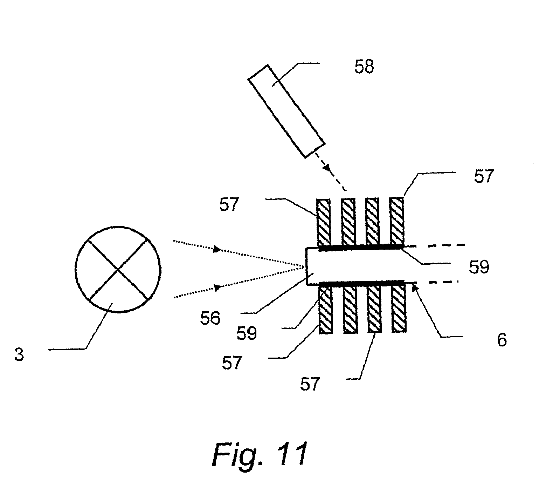

In another embodiment, the second cooling means may is adapted to cool the at least one liquid light guide's end portion 56 facing the light source. For removing mechanical heat and portions of the IR heat not filtered out by the above mentioned IR filter, such a second cooling means may comprise a plurality of cooling fins 57 attached to said end portion 56 of the light guide and a cooling fan 58 for the cooling fins, as illustrated in fig. 11. Each cooling fin 57 is here a circular disc with a central hole through which the light guide 6 is "threaded". The cooling fins 57 may be made of metal. The cooling fins 57 may be attached to the light guide by means of highly heat-conductive glue or adhesive 59, to facilitate heat removal from the light guide.

Basically in the present device or system, the hot components are separated from the cold components. In particular, the means for filtering away or removing unwanted heat are placed in the first component housing. To this end, a currently preferred embodiment of the present device 1 (which may be used in the present system) schematically shown in fig. 12 includes a light source 3, a cooling means (fan) 4 for the light source, the light source 3 being mounted in a reflector 60 adapted to focus light from the light source 3, an UV filter 61 embodied in a protective lamp glass in front of the light source 3, an IR filter 62, a dynamic colour filter 8 receiving light from the light source 3 and/or reflector 60 via the UV and IR filters 61 and 62, a liquid light guide 6, a second cooling means 63 (e.g. as disclosed in fig. 11) at the end portion of the liquid light guide 6 facing the light source 3, the other end of the liquid light guide 6 terminating against an integrator rod 64, and thereafter an image-forming element 9 and a projection lens 10, wherein the light source 3, cooling means 4 for the light source, reflector 60, UV filter 61, IR filter 62, dynamic colour filter 8, and second cooling means 63 are placed in a first component housing 11 separate from the other components which are located in a further component housing 12, and wherein the connection between the component housings is effected via the liquid light guide 6.

The present device may also comprise control means adapted to adjust the dynamic colour filter so as to compensate for weak red colour in the output of the device, i.e. the projected image(s). It has been realised that weak red colour may appear when a long light guide is used. Hence, adjusting the colour filter so as to compensate for weak red colour may improve the colour accuracy of the device. The adjustment is preferably automatic. Said control means may for instance be a control unit of the device.

The above mentioned light source 3 may for instance be a halogen lamp, a light emitting diode (LED) light source, an infrared light (IR) source, or an ultraviolet (UV) light source, but other light sources may be used as well. Should the two latter sources (IR, UV) be used the characteristics of the filter have to be altered accordingly.

In the respective component housings, there may be provided at least one adapter adapted to secure an end of the light guide (or the umbilical 49) to the component housing and transfer light to/from the light guide. The adapter in the housing of the light source may include the above mentioned cooling plate and aperture.

When designing and producing the present device, it may be beneficial to start from a regular projector, and instead of the regular light source provide an input for the above mentioned light guide in the regular projector. The input may for instance be one of the above mentioned adapters. Hence, it is envisaged an (otherwise regular) image or video projector, characterized in that it instead of a regular light source comprises an adapter or input for connection to an external light guide.

The person skilled in the art realized that the present invention by no means is limited to the embodiment(s) described above. On the contrary, many modifications and variations are possible within the scope of the appended claims.

## Claims

1. A device (1) for projecting images onto a screen (2), wherein the device has associated therewith components comprising:
- a light source (3);
- a cooling means (4) for the light source;
- at least one of a reflector (60) adapted to focus light from the light source and a focusing lens that receives light from the light source;
- an image-forming element (9); and
- a lens (10) for projecting onto the screen images received from the image-forming element;
wherein
- at least the light source and the cooling means and the dynamic colour filter are placed in a first component housing (11) separate from the other components which are located in at least one further component housing (12); and
- the connection between the component housings is effected via at least one liquid light guide (6);
**characterized in that**
- the device further comprises a dynamic colour filter (8) which receives light from at least one of the light source/reflector and the focusing lens, and a light-shaping lens or rod (64) which transmits light that has passed through the filter, wherein the image-forming element (9) receives light from the light-shaping lens or rod;
- an ultraviolet filter (61) and an infrared filter (62) are placed in the first component housing and arranged between the light source and the dynamic colour filter; and
- a second cooling means (63) is placed in the first component housing and adapted to cool the end or end portion (56) of the at least one liquid light guide facing the light source.

2. A device as disclosed in claim 1, wherein said reflector (60) or focusing lens is also placed in said first component housing (11).

3. A device as disclosed in claim 1 or 2, wherein said image-forming element (9) is also placed in said first component housing (11).

4. A device as disclosed in any one of claims 1 - 3, wherein the first component housing (11) is located in a room that is sound-isolated from a room in which said further component housings (12) are located.

5. A device as disclosed in any one of claims 1 - 4, wherein the light source is selected from the group consisting of:
a lamp that is powered by an energy source; and
a light mixer (17) that collects light from an energy source powered lamp and from a light collector (18) for natural sun-based light.

6. A device as disclosed in claim 5, wherein the energy source powered lamp that is connected to the light mixer has controllable intensity which is inversely proportional to the intensity of natural light supplied from the light collector.

7. A device according to claim 1, wherein said at least one liquid light guide (6) is a single liquid light guide.

8. A device according to claim 1, further comprising transfer means (45;46;47;48) provided in conjunction with said at least one liquid light guide, wherein said transfer means is adapted to transfer at least one of video signals, control signals, power, and cooling air.

9. A device according to claim 8, wherein the first component housing further comprises at least one of a video signal input, a control signal input, and a power input.

10. A device according to claim 1, wherein said cooling means is a cooling fan (4) or a heat sink.

11. A device according to claim 1, wherein said second cooling means comprises a plurality of cooling fins (57) attached to said end portion of the light guide, and optionally a cooling fan (58) for the cooling fins.

12. A device according to claim 11, wherein said cooling fins are attached to said end portion of the light guide by means of a heat-conductive glue (59).

13. A device according to claim 1, further comprising control means adapted to adjust the dynamic colour filter so as to compensate for any weak red colour in the output of the device.

14. A system for projecting images onto a screen, wherein the projected images comprise juxtaposed or partly overlapping sectional images, and wherein the system includes a corresponding plurality of projector devices (1) according to claim 1.

15. Use of a device (1) as disclosed in any one of claims 1 - 13, or of a system as disclosed in claim 14, wherein at least one of said further component housings is placed in a round-the-clock person-manned room, in order to reduce operational noise during image and/or video projection in the room.

## Patentansprüche

1. Vorrichtung (1) zum Projizieren von Bildern auf einen Schirm (2), wobei die Vorrichtung ihr zugeordnete Bauteile aufweist, umfassend:
- eine Lichtquelle (3);
- ein Kühlungsmittel (4) für die Lichtquelle;
- zumindest eines aus einem Reflektor (60), der für das Fokussieren von Licht aus der Lichtquelle ausgelegt ist, und einer Fokussierlinse, die Licht von der Lichtquelle empfängt;
- ein bilderzeugendes Element (9); und
- eine Linse (10) zum Projizieren von aus dem bilderzeugenden Element empfangenen Bildern auf den Schirm;
wobei
- zumindest die Lichtquelle und das Kühlungsmittel sowie das dynamische Farbfilter in einem ersten Bauteilgehäuse (11) getrennt von den anderen Bauteilen, die in zumindest einem weiteren Bauteilgehäuse (12) angeordnet sind, untergebracht sind; und
- die Verbindung zwischen den Bauteilgehäusen durch zumindest einen flüssigen Lichtleiter (6) erfolgt;
**dadurch gekennzeichnet, dass**
- die Vorrichtung außerdem ein dynamisches Farbfilter (8), das Licht von zumindest einem aus der Lichtquelle/dem Reflektor und der Fokussierlinse empfängt, sowie eine lichtformende Linse oder einen lichtformenden Stab (64) umfasst, der/die Licht überträgt, das durch das Filter hindurchgetreten ist, wobei das bilderzeugende Element (9) Licht von der lichtformenden Linse oder dem lichtformenden Stab empfängt;
- ein Ultraviolettfilter (61) und ein Infrarotfilter (62) im ersten Bauteilgehäuse untergebracht und zwischen der Lichtquelle und dem dynamischen Farbfilter angeordnet sind; und
- ein zweites Kühlungsmittel (63) im ersten Bauteilgehäuse untergebracht und für die Kühlung des Endes oder Endabschnittes (56) des zumindest einen, der Lichtquelle zugewandten flüssigen Lichtleiters ausgelegt ist.

2. Vorrichtung wie in Anspruch 1 offenbart, wobei der Reflektor (60) oder die Fokussierlinse ebenfalls im ersten Bauteilgehäuse (11) untergebracht ist.

3. Vorrichtung wie in Anspruch 1 oder 2 offenbart, wobei das bilderzeugende Element (9) ebenfalls im ersten Bauteilgehäuse (11) untergebracht ist.

4. Vorrichtung wie in irgendeinem der Ansprüche 1-3 offenbart, wobei das erste Bauteilgehäuse (11) in einem Raum angeordnet ist, der gegenüber einem Raum, in welchem die weiteren Bauteilgehäuse (12) untergebracht sind, schallisoliert ist.

5. Vorrichtung wie in irgendeinem der Ansprüche 1-4 offenbart, wobei die Lichtquelle aus der Gruppe ausgewählt ist, bestehend aus:
einer von einer Energiequelle angetriebenen Leuchte; und
einem Lichtmischer (17), der Licht aus einer von einer Energiequelle angetriebenen Leuchte und aus einem Lichtkollektor (18) für natürliches, sonnenbasiertes Licht sammelt.

6. Vorrichtung wie in Anspruch 5 offenbart, wobei die mit dem Lichtmischer verbundene, von der Energiequelle angetriebene Leuchte eine steuerbare Intensität aufweist, die umgekehrt proportional zur Intensität des natürlichen, vom Lichtkollektor zugeführten Lichts ist.

7. Vorrichtung nach Anspruch 1, wobei der zumindest eine flüssige Lichtleiter (6) ein flüssiger Einzellichtleiter ist.

8. Vorrichtung nach Anspruch 1, außerdem umfassend Übertragungsmittel (45;46;47;48), die zusammen mit dem zumindest einen flüssigen Lichtleiter vorgesehen sind, wobei das Übertragungsmittel für das Übertragen von zumindest einem aus Videosignalen, Steuersignalen, Leistung und Kühlluft ausgelegt ist.

9. Vorrichtung nach Anspruch 8, wobei das erste Bauteilgehäuse außerdem zumindest eines aus einem Videosignaleingang, einem Steuersignaleingang und einem Leistungseingang umfasst.

10. Vorrichtung nach Anspruch 1, wobei das Kühlungsmittel ein Kühlgebläse (4) oder ein Kühlkörper ist.

11. Vorrichtung nach Anspruch 1, wobei das zweite Kühlungsmittel eine Vielzahl von am Endabschnitt des Lichtleiters befestigten Kühlrippen (57) und wahlweise ein Kühlgebläse (58) für die Kühlrippen umfasst.

12. Vorrichtung nach Anspruch 11, wobei die Kühlrippen mittels eines wärmeleitenden Klebers (59) am Endabschnitt des Lichtleiters befestigt sind.

13. Vorrichtung nach Anspruch 1, außerdem umfassend Steuermittel, die für das Justieren des dynamischen Farbfilters ausgelegt sind, um jegliche schwache rote Farbe im Ausgang der Einrichtung zu auszugleichen.

14. System zum Projizieren von Bildern auf einen Schirm, wobei die projizierten Bilder nebeneinandergestellte oder teilweise überlappende Schnittbilder umfassen, und wobei das System eine entsprechende Vielzahl von Projektionsvorrichtungen (1) nach Anspruch 1 aufweist.

15. Verwendung einer Vorrichtung (1) wie in irgendeinem der Ansprüche 1-13 offenbart oder eines Systems wie in Anspruch 14 offenbart, wobei zumindest eines der weiteren Bauteilgehäuse in einem rund um die Uhr personenbesetzten Raum untergebracht ist, um während der Bild- und/oder Videoprojektion im Raum den Betriebslärm zu verringern.

## Revendications

1. Dispositif (1) pour projeter des images sur un écran (2), dans lequel le dispositif est associé à des composants comprenant:
- une source de lumière (3);
- un moyen de refroidissement (4) pour la source de lumière;
- au moins l'un d'un réflecteur (60) adapté pour focaliser de la lumière provenant de la source de lumière et d'une lentille de focalisation qui reçoit de la lumière provenant de la source de lumière;
- un élément de formation d'image (9); et
- une lentille (10) pour projeter sur l'écran des images reçues de l'élément de formation d'image;
dans lequel
- au moins la source de lumière et le moyen de refroidissement et le filtre de couleur dynamique sont placés dans un premier boîtier composant (11) séparé des autres composants qui se trouvent dans au moins un autre boîtier composant (12); et
- la liaison entre les boîtiers composant est réalisée par l'intermédiaire d'au moins un guide de lumière liquide (6);
**caractérisé en ce que**
- le dispositif comprend en outre un filtre de couleur dynamique (8) qui reçoit de la lumière depuis au moins l'un de la source de lumière/du réflecteur et de la lentille de focalisation, et une lentille ou tige formant de la lumière (64) qui transmet de la lumière qui a passé à travers le filtre, l'élément de formation d'image (9) recevant de la lumière provenant de la lentille ou tige formant de la lumière;
- un filtre ultraviolet (61) et un filtre infrarouge (62) sont placés dans le premier boîtier composant et arrangés entre la source de lumière et le filtre de couleur dynamique; et
- un deuxième moyen de refroidissement (63) est placé dans le premier boîtier composant et adapté pour refroidir l'extrémité ou la portion d'extrémité (56) de l'au moins un guide de lumière liquide en face de la source de lumière.

2. Dispositif comme divulgué dans la revendication 1, dans lequel ledit réflecteur (60) ou ladite lentille de focalisation est également placé dans le premier boîtier composant (11).

3. Dispositif comme divulgué dans les revendications 1 ou 2, dans lequel ledit élément de formation d'image (9) est également placé dans ledit premier boîtier composant (11).

4. Dispositif comme divulgué dans l'une quelconque des revendications 1 à 3, dans lequel le premier boîtier composant (11) est situé dans une pièce qui est insonorisée par rapport à une pièce dans laquelle lesdits autres boîtiers composant (12) sont situés.

5. Dispositif comme divulgué dans l'une quelconque des revendications 1 à 4, dans lequel la source de lumière est choisie dans le groupe consistant en:
une lampe qui est alimentée par une source d'énergie; et
un mélangeur de lumière (17) qui recueille de la lumière provenant d'une lampe alimentée de source d'énergie et d'un collecteur de lumière (18) pour la lumière naturelle à base du soleil.

6. Dispositif comme divulgué dans la revendication 5, dans lequel la lampe alimentée de source d'énergie qui est reliée au mélangeur de lumière présente une intensité réglable, qui est inversement proportionnelle à l'intensité de la lumière naturelle fournie à partir du collecteur de lumière.

7. Dispositif selon la revendication 1, dans lequel ledit au moins un guide de lumière liquide (6) est un guide unique de lumière liquide.

8. Dispositif selon la revendication 1, comprenant un outre des moyens de transfert (45; 46; 47; 48) pourvus en liaison avec ledit au moins un guide de lumière liquide, ledit moyen de transfert étant adapté pour transférer au moins l'un de signaux de vidéo, de signaux de commande, de puissance et d'air de refroidissement.

9. Dispositif selon la revendication 8, dans lequel le premier boîtier composant comprend en outre au moins l'une d'une sortie de signal de vidéo, d'une sortie de signal de commande et d'une sortie de puissance.

10. Dispositif selon la revendication 1, dans lequel ledit moyen de refroidissement est un ventilateur de refroidissement (4) ou un dissipateur thermique.

11. Dispositif selon la revendication 1, dans lequel ledit deuxième moyen de refroidissement comprend une pluralité d'ailettes de refroidissement (57) attachées à ladite portion d'extrémité du guide de lumière, et éventuellement un ventilateur de refroidissement (58) pour les ailettes de refroidissement.

12. Dispositif selon la revendication 11, dans lequel les ailettes de refroidissement sont attachées à ladite portion d'extrémité du guide de lumière au moyen d'une colle conductrice de chaleur (59).

13. Dispositif selon la revendication 1, comprenant en outre des moyens de commande adaptés pour régler le filtre de couleur dynamique afin de compenser toute couleur rouge faible dans la sortie du dispositif.

14. Système pour projeter des images sur un écran, dans lequel les images projetées comprennent des images en coupe juxtaposées ou se chevauchant partiellement, et dans lequel le système comporte une pluralité correspondante de dispositifs de projection (1) selon la revendication 1.

15. Usage d'un dispositif (1) comme divulgué dans l'une quelconque des revendications 1 à 13, ou d'un système comme divulgué dans la revendication 14, dans lequel au moins l'un desdits autres boîtiers composant est placé dans une pièce pourvue de personnel 24 heures sur 24 heures, afin de réduire le bruit de fonctionnement au cours de la projection d'image et/ou de vidéo dans la pièce.
